# EUROPEAN PATENT APPLICATION

(11) **EP 4 674 676 A1**
(43) Date of publication of application: **07.01.2026**
(21) Application number: 25186542.4
(22) Date of filing: 01.07.2025
(51) Int. Cl.: B60L 53/16, H01R 4/70, H01R 4/30, H01R 4/34, H01M 50/50, H01R 9/22, H02G 5/06, H01R 4/48, H01R 4/62, H01R 13/631

(54) **ELECTRICAL CONNECTION DEVICE**

(30) Priority: 03.07.2024 CN 202410890319
(71) Applicant: Tyco Electronics (Shanghai) Co., Ltd., Pilot Free Trade Zone Shanghai 200131 (CN)
(72) Inventor: Yang, Yuchen, Shanghai, 200233 (CN); Zhou, Xiao, Shanghai, 200233 (CN); Li, Ziwei, Shanghai, 200233 (CN); Chen, Hao, Shanghai, 200233 (CN)
(74) Representative: Grünecker Patent- und Rechtsanwälte PartG mbB

(57) **Abstract**

The present invention discloses an electrical connection device which includes: a housing having a front port, a rear port and an upper port; a first electrical transmission member having an end inserted into the housing from the front port and having a first connection hole formed in the end thereof; a second electrical transmission member having an end inserted into the housing from the rear port and having a second connection hole formed in the end thereof; a bolt assembly entering the housing from the upper port and comprising a bolt passing through the first connection hole and the second connection hole; and a nut assembly disposed in a bottom wall of the housing and threadedly connected to the bolt to fasten the first electrical transmission member and the second electrical transmission member together. The first connection hole is oblong and extends in a transverse direction of the housing to enable the end of the first electrical transmission member to move in the transverse direction. The second connection hole is oblong and extends in the longitudinal direction of the housing to enable the end of the second electrical transmission member to move in the longitudinal direction.

## Description

### CROSS-REFERENCE TO RELATED APPLICATION

This application claims the benefit of Chinese Patent Application No. CN202410890319X filed on July 3 in the State Intellectual Property Office of China, the whole disclosure of which is incorporated herein by reference.

### BACKGROUND OF THE INVENTION

### Field of the Invention

The present invention relates to an electrical connection device, and particularly to an electrical connection device for electrically connecting a charging seat and a battery pack.

### Description of the Related Art

In the prior art, the electrical connection between a charging seat and a battery pack of an electric vehicle is typically realized by means of a large-cross-section wire. As the charging current increases, the cross-section of the wire becomes larger. To reduce the manufacturing cost of wires, improve the current-carrying capacity of wires and lower the temperature rise of wires, aluminum busbars or solid aluminum rod conductors have started to be used in the prior art to replace traditional copper-core wires. However, aluminum busbars or aluminum rods have high rigidity and lack flexibility. In the presence of manufacturing tolerances and installation misalignments, this leads to very difficult electrical connection operations between the charging seat and the battery pack, and sometimes large tensile stresses exist.

### SUMMARY OF THE INVENTION

The present invention has been made to overcome or alleviate at least one aspect of the above-mentioned disadvantages.

According to an aspect of the present invention, there is provided an electrical connection device. The electrical connection device includes: a housing having a front port and a rear port opposite each other in a longitudinal direction thereof, and an upper port on a top wall thereof; a first electrical transmission member having an end inserted into the housing from the front port of the housing and having a first connection hole formed in the end thereof; a second electrical transmission member having an end inserted into the housing from the rear port of the housing and having a second connection hole formed in the end thereof; a bolt assembly entering the housing from the upper port of the housing and comprising a bolt passing through the first connection hole and the second connection hole; and a nut assembly disposed in a bottom wall of the housing and threadedly connected to the bolt to fasten the first electrical transmission member and the second electrical transmission member together. The first connection hole is oblong and extends in a transverse direction of the housing to enable the end of the first electrical transmission member to move in the transverse direction of the housing relative to the bolt. The second connection hole is oblong and extends in the longitudinal direction of the housing to enable the end of the second electrical transmission member to move in the longitudinal direction of the housing relative to the bolt.

According to an exemplary embodiment of the present invention, a predetermined gap exists between the end of the first electrical transmission member and side walls of the housing to allow the end of the first electrical transmission member to rotate about the bolt within a predetermined angular range.

According to another exemplary embodiment of the present invention, a predetermined gap exists between the end of the second electrical transmission member and side walls of the housing to allow the end of the second electrical transmission member to rotate about the bolt within a predetermined angular range.

According to another exemplary embodiment of the present invention, the electrical connection device further includes an elastic conductive member compressed in an axial direction of the bolt between the end of the first electrical transmission member and the end of the second electrical transmission member to enable one of the end of the first electrical transmission member and the end of the second electrical transmission member to float in the axial direction of the bolt relative to the other.

According to another exemplary embodiment of the present invention, the elastic conductive member is a helical spring coiled into a ring shape or an annular wave spring.

According to another exemplary embodiment of the present invention, the first electrical transmission member includes: a first conductor having an end that is flat; and a first insulating layer, the first conductor being wrapped in the first insulating layer. The end of the first conductor is exposed from the first insulating layer, and the first connection hole is formed in the end of the first conductor.

According to another exemplary embodiment of the present invention, the second electrical transmission member includes: a second conductor having an end that is flat; and a second insulating layer, the second conductor being wrapped in the second insulating layer. The end of the second conductor is exposed from the second insulating layer, and the second connection hole is formed in the end of the second conductor.

According to another exemplary embodiment of the present invention, the first conductor and the second conductor are aluminum busbars or aluminum alloy busbars. The electrical connection device further includes: a first copper terminal fixed to the end of the first conductor and formed with an oblong first through hole corresponding to the first connection hole; and a second copper terminal fixed to the end of the second conductor and formed with an oblong second through hole corresponding to the second connection hole. After the bolt is tightened, the first copper terminal and the second copper terminal are in direct electrical contact to electrically connect the first electrical transmission member and the second electrical transmission member.

According to another exemplary embodiment of the present invention, the first conductor and the second conductor are aluminum busbars or aluminum alloy busbars. The electrical connection device further includes: a first copper terminal fixed to the end of the first conductor and formed with an oblong first through hole corresponding to the first connection hole; and a second copper terminal fixed to the end of the second conductor and formed with an oblong second through hole corresponding to the second connection hole; and an elastic conductive member compressed in an axial direction of the bolt between the first copper terminal and the second copper terminal. After the bolt is tightened, the first copper terminal and the second copper terminal are floatingly electrically connected together via the elastic conductive member.

According to another exemplary embodiment of the present invention, the first copper terminal is welded or riveted to the end of the first conductor and the second copper terminal is welded or riveted to the end of the second conductor.

According to another exemplary embodiment of the present invention, the end of the first electrical transmission member is located above the end of the second electrical transmission member. The nut assembly includes: a nut embedded in a mounting groove in the bottom wall of the housing; and a lower washer compressed between the nut and the end of the second electrical transmission member.

According to another exemplary embodiment of the present invention, the end of the first electrical transmission member is located above the end of the second electrical transmission member. The bolt assembly further includes: an upper washer compressed between an end flange of the bolt and the end of the first electrical transmission member; and an insulating cap engaged to an end and the end flange of the bolt. An operating portion adapted to engage with an operating tool is formed on the insulating cap, so as to enable the bolt to be tightened or loosened by the operating tool.

According to another exemplary embodiment of the present invention, the bolt assembly further includes a sealing ring sleeved on the insulating cap. When the bolt is tightened, the insulating cap is located in the upper port of the housing, the sealing ring is compressed radially between the insulating cap and an inner peripheral surface of the upper port of the housing to seal the upper port of the housing.

According to another exemplary embodiment of the present invention, the electrical connection device further includes a front seal sleeved on the first electrical transmission member. The front seal is inserted into the front port of the housing and is compressed radially between an outer peripheral surface of the first electrical transmission member and an inner peripheral surface of the front port to seal the front port of the housing.

According to another exemplary embodiment of the present invention, the end of the first electrical transmission member is located above the end of the second electrical transmission member, the housing further has a first support rib connected to the bottom wall thereof, the first electrical transmission member passes through a gap between a top surface of the first support rib and the top wall of the housing, and the first support rib abuts against a bottom side of the first electrical transmission member.

According to another exemplary embodiment of the present invention, the electrical connection device further includes a front end cover sleeved on the first electrical transmission member and locked onto a front end of the housing. A first positioning rib is formed on an inner side of the front end cover, and the front seal is compressed axially between the first positioning rib and the first support rib to axially position the front seal.

According to another exemplary embodiment of the present invention, the electrical connection device further includes a rear seal sleeved on the second electrical transmission member. The rear seal is inserted into the rear port of the housing and is compressed radially between an outer peripheral surface of the second electrical transmission member and an inner peripheral surface of the rear port to seal the rear port of the housing.

According to another exemplary embodiment of the present invention, the end of the first electrical transmission member is located above the end of the second electrical transmission member, the housing further has a second support rib connected to the top wall thereof, the second electrical transmission member passes through a gap between a bottom surface of the second support rib and the bottom wall of the housing, and the second support rib abuts against a top side of the second electrical transmission member.

According to another exemplary embodiment of the present invention, the electrical connection device further includes a rear end cover sleeved on the second electrical transmission member and locked onto a rear end of the housing. A second positioning rib is formed on an inner side of the rear end cover, and the rear seal is compressed axially between the second positioning rib and the second support rib to axially position the rear seal.

According to another aspect of the present invention, there is provided an electrical connection method. The electrical connection method includes the following steps: providing an electrical connection device as aforementioned, wherein the bolt of the electrical connection device is in an untightened state; electrically connecting the other end of the first electrical transmission member and the other end of the second electrical transmission member of the electrical connection device to a first device and a second device, respectively; and tightening the bolt of the electrical connection device to fasten the end of the first electrical transmission member and the end of the second electrical transmission member together.

According to an exemplary embodiment of the present invention, one of the first device and the second device is a charging seat and the other is a battery pack.

In the foregoing exemplary embodiments according to the present invention, the first and second electrical transmission members of the electrical connection device can move in the longitudinal and/or transverse direction of the housing before the bolt is tightened, and thus, longitudinal and transverse errors can be accommodated, reducing the difficulty of electrical connection between the charging seat and the battery pack.

Furthermore, in some of the foregoing exemplary embodiments according to the present invention, the first and second electrical transmission members of the electrical connection device can rotate about the bolt within the predetermined angular range before the bolt is tightened, and thus, mounting angular misalignments can be accommodated, reducing the difficulty of electrical connection between the charging seat and the battery pack.

Furthermore, in some of the foregoing exemplary embodiments according to the present invention, the first and second electrical transmission members of the electrical connection device are floatingly electrically connected together by means of the elastic conductive member clamped between them, and thus, tolerances/misalignments in a height direction can be accommodated, reducing the difficulty of electrical connection between the charging seat and the battery pack.

### BRIEF DESCRIPTION OF THE DRAWINGS

The above and other features of the present invention will become more apparent by describing in detail exemplary embodiments thereof with reference to the accompanying drawings, in which:
Figurer 1 shows an illustrative perspective view of an electrical connection device according to an exemplary embodiment of the present invention;
Figure 2 shows a longitudinal cross-sectional view of the electrical connection device according to an exemplary embodiment of the present invention;
Figurer 3 shows a longitudinal cross-sectional view of a housing of the electrical connection device according to an exemplary embodiment of the present invention;
Figure 4 shows a horizontal cross-sectional view of the electrical connection device according to an exemplary embodiment of the present invention;
Figurer 5 shows an illustrative exploded view of the electrical connection device according to an exemplary embodiment of the present invention;
Figure 6 shows an exploded cross-sectional view of an electrical connection module of the electrical connection device according to an exemplary embodiment of the present invention;
Figure 7 shows an illustrative exploded view of the electrical connection module of the electrical connection device according to an exemplary embodiment of the present invention;
Figure 8 shows a cross-sectional view of an electrical connection module of an electrical connection device according to another exemplary embodiment of the present invention; and
Figurer 9 shows an illustrative perspective view of an elastic conductive member of the electrical connection device according to another exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an electrical connection device. The electrical connection device includes: a housing having a front port and a rear port opposite each other in a longitudinal direction thereof, and an upper port on a top wall thereof; a first electrical transmission member having an end inserted into the housing from the front port of the housing and having a first connection hole formed in the end thereof; a second electrical transmission member having an end inserted into the housing from the rear port of the housing and having a second connection hole formed in the end thereof; a bolt assembly entering the housing from the upper port of the housing and comprising a bolt passing through the first connection hole and the second connection hole; and a nut assembly disposed in a bottom wall of the housing and threadedly connected to the bolt to fasten the first electrical transmission member and the second electrical transmission member together. The first connection hole is oblong and extends in a transverse direction of the housing to enable the end of the first electrical transmission member to move in the transverse direction of the housing relative to the bolt. The second connection hole is oblong and extends in the longitudinal direction of the housing to enable the end of the second electrical transmission member to move in the longitudinal direction of the housing relative to the bolt.

According to another general concept of the present invention, there is provided an electrical connection method. The electrical connection method includes the following steps: providing an electrical connection device as aforementioned, wherein the bolt of the electrical connection device is in an untightened state; electrically connecting the other end of the first electrical transmission member and the other end of the second electrical transmission member of the electrical connection device to a first device and a second device, respectively; and tightening the bolt of the electrical connection device to fasten the end of the first electrical transmission member and the end of the second electrical transmission member together.

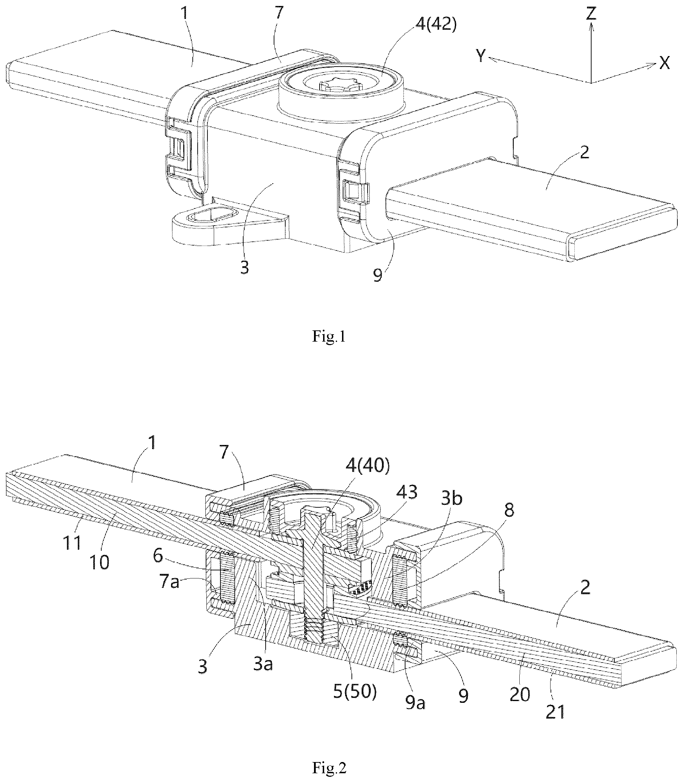

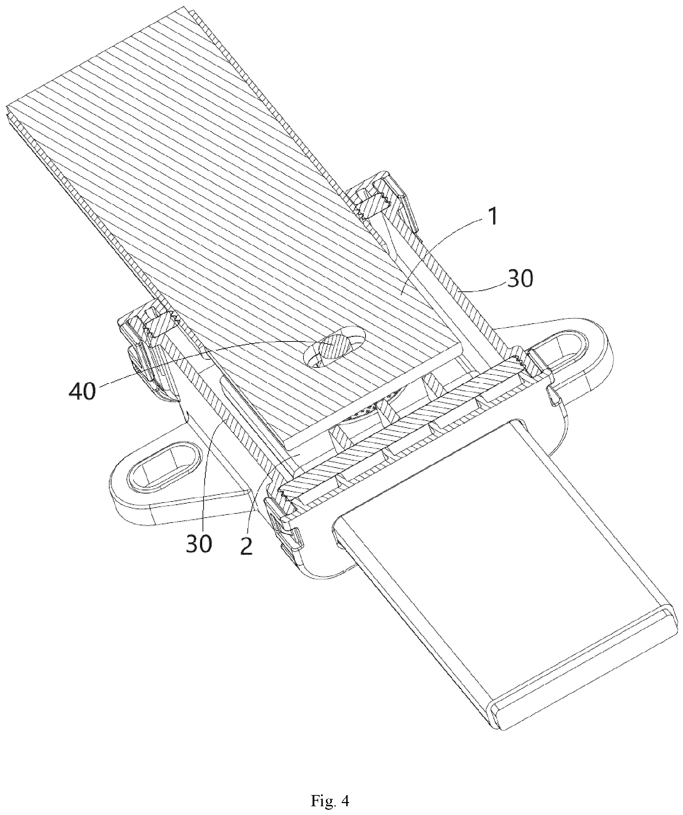

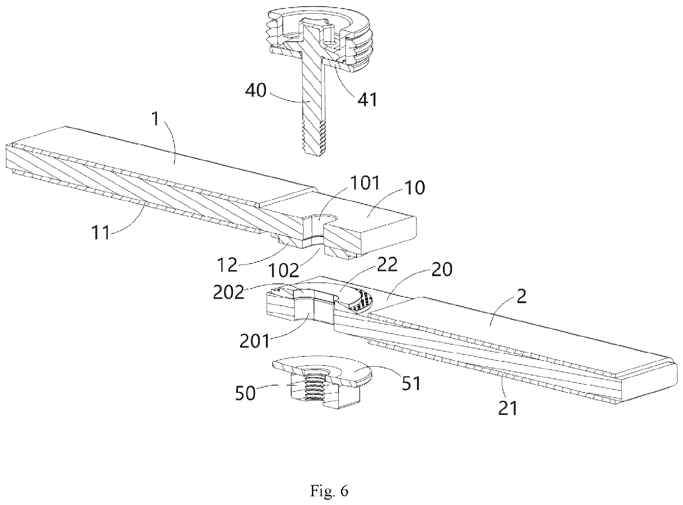

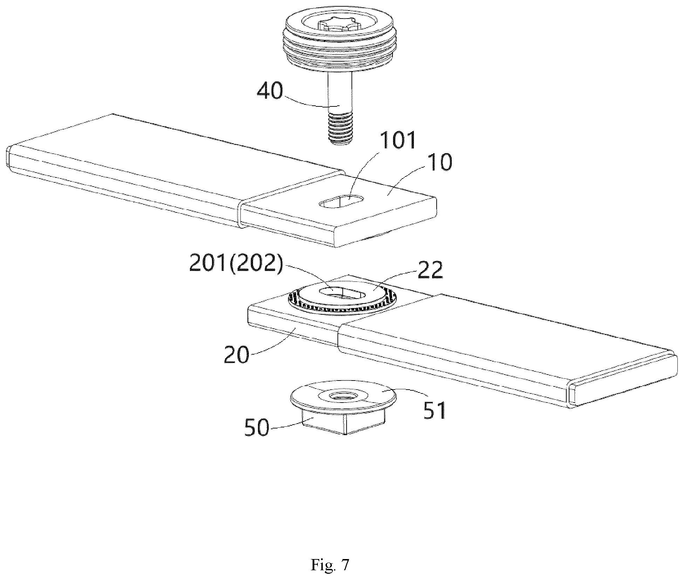

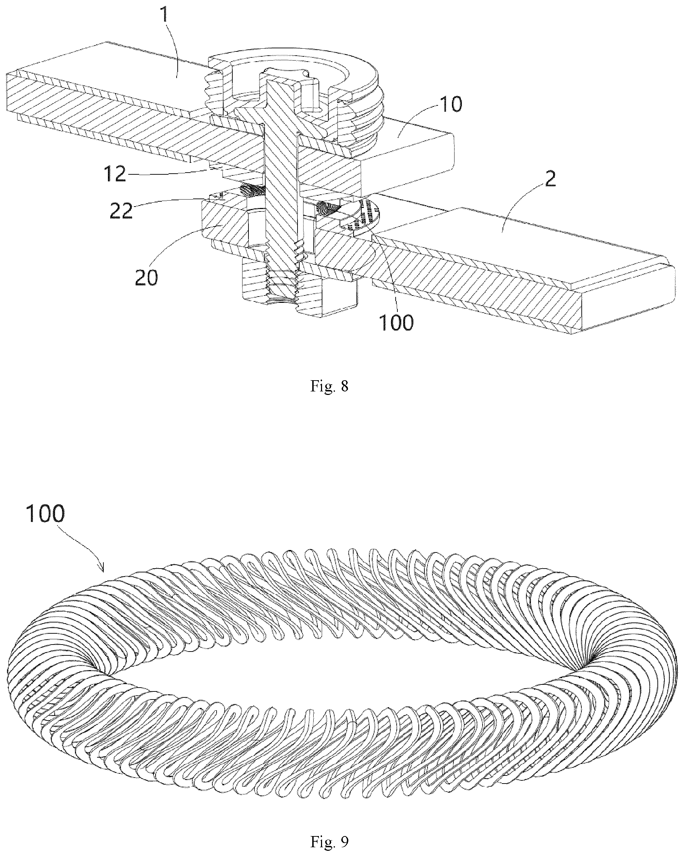

Figurer 1 shows an illustrative perspective view of an electrical connection device according to an exemplary embodiment of the present invention; Figure 2 shows a longitudinal cross-sectional view of the electrical connection device according to an exemplary embodiment of the present invention; Figurer 3 shows a longitudinal cross-sectional view of a housing 3 of the electrical connection device according to an exemplary embodiment of the present invention; Figure 4 shows a horizontal cross-sectional view of the electrical connection device according to an exemplary embodiment of the present invention; Figurer 5 shows an illustrative exploded view of the electrical connection device according to an exemplary embodiment of the present invention; Figure 6 shows an exploded cross-sectional view of an electrical connection module of the electrical connection device according to an exemplary embodiment of the present invention; Figure 7 shows an illustrative exploded view of the electrical connection module of the electrical connection device according to an exemplary embodiment of the present invention; Figure 8 shows a cross-sectional view of an electrical connection module of an electrical connection device according to another exemplary embodiment of the present invention; and Figurer 9 shows an illustrative perspective view of an elastic conductive member of the electrical connection device 100 according to another exemplary embodiment of the present invention.

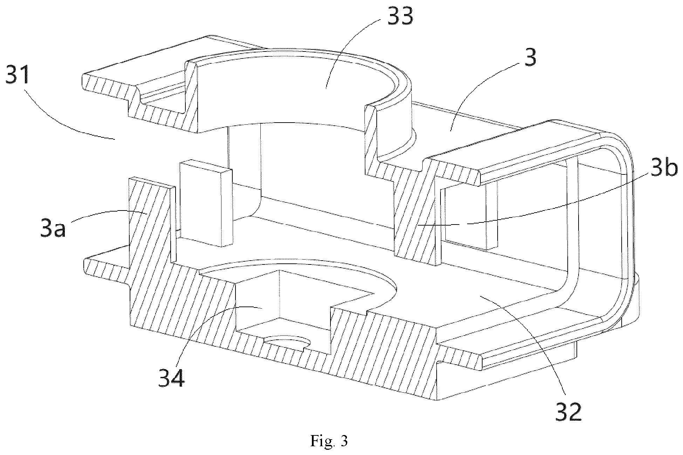

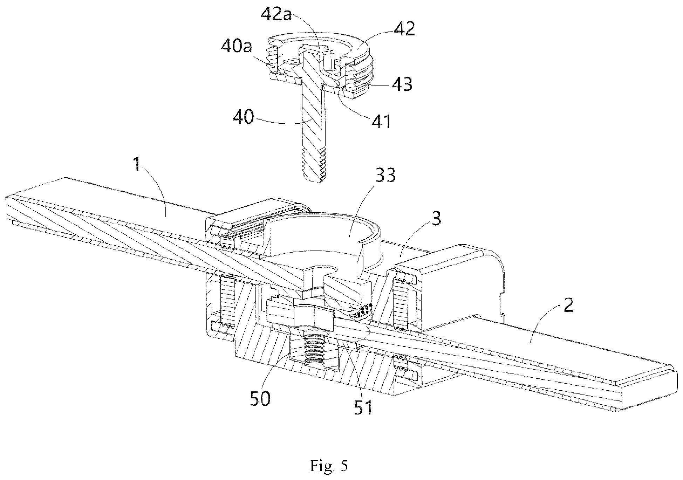

As shown in Figures 1 to 9, in an exemplary embodiment of the present invention, an electrical connection device is disclosed. The electrical connection device includes a first electrical transmission member 1, a second electrical transmission member 2, a housing 3, a bolt assembly 4 and a nut assembly 5. The housing 3 has a front port 31 and a rear port 32 opposite each other in a longitudinal direction Y thereof, and an upper port 33 on a top wall thereof. The first electrical transmission member 1 has an end inserted into the housing 3 from the front port 31 of the housing 3 and has a first connection hole 101 formed in the end thereof. The second electrical transmission member 2 has an end inserted into the housing 3 from the rear port 32 of the housing 3 and has a second connection hole 201 formed in the end thereof. The bolt assembly 4 enters the housing 3 from the upper port 33 of the housing 3 and includes a bolt 40 passing through the first connection hole 101 and the second connection hole 201. The nut assembly 5 is disposed in a bottom wall of the housing 3 and threadedly connected to the bolt 40 to fasten the first electrical transmission member 1 and the second electrical transmission member 2 together. The first connection hole 101 is oblong and extends in a transverse direction X of the housing 3 to enable the end of the first electrical transmission member 1 to move in the transverse direction X of the housing 3 relative to the bolt 40 before the bolt 40 is tightened. The second connection hole 201 is oblong and extends in the longitudinal direction Y of the housing 3 to enable the end of the second electrical transmission member 2 to move in the longitudinal direction Y of the housing 3 relative to the bolt 40 before the bolt 40 is tightened.

As shown in Figures 1 to 9, in the illustrated embodiment, a predetermined gap exists between the end of the first electrical transmission member 1 and side walls 30 of the housing 3 to allow the end of the first electrical transmission member 1 to rotate about the bolt 40 within a predetermined angular range.

As shown in Figures 1 to 9, in the illustrated embodiment, a predetermined gap exists between the end of the second electrical transmission member 2 and side walls 30 of the housing 3 to allow the end of the second electrical transmission member 2 to rotate about the bolt 40 within a predetermined angular range.

As shown in Figures 8 to 9, in the illustrated embodiment, the electrical connection device further includes an elastic conductive member 100 compressed in an axial direction of the bolt 40 between the end of the first electrical transmission member 1 and the end of the second electrical transmission member 2 to enable one of the end of the first electrical transmission member 1 and the end of the second electrical transmission member 2 to float in the axial direction of the bolt 40 relative to the other.

As shown in Figures 1 to 9, in the illustrated embodiment, the elastic conductive member 100 is a helical spring coiled into a ring shape. However, the present invention is not limited to the illustrated embodiments. For example, in another exemplary embodiment according to the present invention, the elastic conductive member 100 may be configured as an annular wave spring.

As shown in Figures 1 to 9, in the illustrated embodiment, the first electrical transmission member 1 includes a first conductor 10 and a first insulating layer 11. The first conductor 10 has an end that is flat. The first conductor 10 is wrapped in the first insulating layer 11. The end of the first conductor 10 is exposed from the first insulating layer 11, and the first connection hole 101 is formed in the end of the first conductor 10.

As shown in Figures 1 to 9, in the illustrated embodiment, the second electrical transmission member 2 includes a second conductor 20 and a second insulating layer 21. The second conductor 20 has and end that is flat. The second conductor 20 is wrapped in the second insulating layer 21. The end of the second conductor 20 is exposed from the second insulating layer 21, and the second connection hole 201 is formed in the end of the second conductor 20.

As shown in Figures 1 to 7, in the illustrated embodiment, the first conductor 10 and the second conductor 20 are aluminum busbars or aluminum alloy busbars. The electrical connection device further includes a first copper terminal 12 and a second copper terminal 22. The first copper terminal 12 is fixed to the end of the first conductor 10 and formed with an oblong first through hole 102 corresponding to the first connection hole 101. The second copper terminal 22 is fixed to the end of the second conductor 20 and formed with an oblong second through hole 202 corresponding to the second connection hole 201. After the bolt 40 is tightened, the first copper terminal 12 and the second copper terminal 22 are in direct electrical contact to electrically connect the first electrical transmission member 1 and the second electrical transmission member 2.

As shown in Figures 8 to 9, in the illustrated embodiment, the first conductor 10 and the second conductor 20 are aluminum busbars or aluminum alloy busbars. The electrical connection device further includes a first copper terminal 12, a second copper terminal 22 and an elastic conductive member 100. The first copper terminal 12 is fixed to the end of the first conductor 10 and formed with an oblong first through hole 102 corresponding to the first connection hole 101. The second copper terminal 22 fixed to the end of the second conductor 20 and formed with an oblong second through hole 202 corresponding to the second connection hole 201. The elastic conductive member 100 is compressed in an axial direction of the bolt 40 between the first copper terminal 12 and the second copper terminal 22. After the bolt 40 is tightened, the first copper terminal 12 and the second copper terminal 22 are floatingly electrically connected together via the elastic conductive member 100.

As shown in Figures 1 to 9, in the illustrated embodiment, the first copper terminal 12 is welded or riveted to the end of the first conductor 10 and the second copper terminal 22 is welded or riveted to the end of the second conductor 20.

As shown in Figures 1 to 9, in the illustrated embodiment, the end of the first electrical transmission member 1 is located above the end of the second electrical transmission member 2. The nut assembly 5 includes a nut 50 and a lower washer 51. The nut 50 is embedded in a mounting groove 34 in the bottom wall of the housing 3. The lower washer 51 is compressed between the nut 50 and the end of the second electrical transmission member 2.

As shown in Figures 1 to 9, in the illustrated embodiment, the end of the first electrical transmission member 1 is located above the end of the second electrical transmission member 2. The bolt assembly 4 further includes an upper washer 41 and an insulating cap 42. The upper washer 41 is compressed between an end flange 40a of the bolt 40 and the end of the first electrical transmission member 1. The insulating cap 42 is engaged to an end and the end flange 40a of the bolt 40. An operating portion 42a adapted to engage with an operating tool is formed on the insulating cap 42, so as to enable the bolt 40 to be tightened or loosened by the operating tool.

As shown in Figures 1 to 9, in the illustrated embodiment, the bolt assembly 4 further includes a sealing ring 43. The sealing ring 43 is sleeved on the insulating cap 42. When the bolt 40 is tightened, the insulating cap 42 is located in the upper port 33 of the housing 3, the sealing ring 43 is compressed radially between the insulating cap 42 and an inner peripheral surface of the upper port 33 of the housing 3 to seal the upper port 33 of the housing 3.

As shown in Figures 1 to 9, in the illustrated embodiment, the electrical connection device further includes a front seal 6 sleeved on the first electrical transmission member 1. The front seal 6 is inserted into the front port 31 of the housing 3 and is compressed radially between an outer peripheral surface of the first electrical transmission member 1 and an inner peripheral surface of the front port 31 to seal the front port 31 of the housing 3.

As shown in Figures 1 to 9, in the illustrated embodiment, the end of the first electrical transmission member 1 is located above the end of the second electrical transmission member 2, the housing 3 further has a first support rib 3a connected to the bottom wall thereof, the first electrical transmission member 1 passes through a gap between a top surface of the first support rib 3a and the top wall of the housing 3, and the first support rib 3a abuts against a bottom side of the first electrical transmission member 1.

As shown in Figures 1 to 9, in the illustrated embodiment, the electrical connection device further includes a front end cover 7 sleeved on the first electrical transmission member 1 and locked onto a front end of the housing 3. A first positioning rib 7a is formed on an inner side of the front end cover 7, and the front seal 6 is compressed axially between the first positioning rib 7a and the first support rib 3a to axially position the front seal 6.

As shown in Figures 1 to 9, in the illustrated embodiment, the electrical connection device further includes a rear seal 8 sleeved on the second electrical transmission member 2. The rear seal 8 is inserted into the rear port 32 of the housing 3 and is compressed radially between an outer peripheral surface of the second electrical transmission member 2 and an inner peripheral surface of the rear port 32 to seal the rear port 32 of the housing 3.

As shown in Figures 1 to 9, in the illustrated embodiment, the end of the first electrical transmission member 1 is located above the end of the second electrical transmission member 2, the housing 3 further has a second support rib 3b connected to the top wall thereof, the second electrical transmission member 2 passes through a gap between a bottom surface of the second support rib 3b and the bottom wall of the housing 3, and the second support rib 3b abuts against a top side of the second electrical transmission member 2.

As shown in Figures 1 to 9, in the illustrated embodiment, the electrical connection device further includes a rear end cover 9 sleeved on the second electrical transmission member 2 and locked onto a rear end of the housing 3. A second positioning rib 9a is formed on an inner side of the rear end cover 9, and the rear seal 8 is compressed axially between the second positioning rib 9a and the second support rib 3b to axially position the rear seal 8.

As shown in Figures 1 to 9, in another exemplary embodiment of the present invention, an electrical connection method is disclosed. The electrical connection method includes the following steps:
S10: providing an electrical connection device as aforementioned, and the bolt 40 of the electrical connection device is in an untightened state.
S20: electrically connecting the other end of the first electrical transmission member 1 and the other end of the second electrical transmission member 2 of the electrical connection device to a first device (not shown) and a second device (not shown), respectively.
S30: tightening the bolt 40 of the electrical connection device to fasten the end of the first electrical transmission member 1 and the end of the second electrical transmission member 2 together.

As shown in Figures 1 to 9, in the illustrated embodiment, one of the first device and the second device is a charging seat and the other is a battery pack.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. An electrical connection device, comprising:
a housing (3) having a front port (31) and a rear port (32) opposite each other in a longitudinal direction (Y) thereof, and an upper port (33) on a top wall thereof;
a first electrical transmission member (1) having an end inserted into the housing (3) from the front port (31) of the housing (3) and having a first connection hole (101) formed in the end thereof;
a second electrical transmission member (2) having an end inserted into the housing (3) from the rear port (32) of the housing (3) and having a second connection hole (201) formed in the end thereof;
a bolt assembly (4) entering the housing (3) from the upper port (33) of the housing (3) and comprising a bolt (40) passing through the first connection hole (101) and the second connection hole (201); and
a nut assembly (5) disposed in a bottom wall of the housing (3) and threadedly connected to the bolt (40) to fasten the first electrical transmission member (1) and the second electrical transmission member (2) together;
wherein the first connection hole (101) is oblong and extends in a transverse direction (X) of the housing (3) to enable the end of the first electrical transmission member (1) to move in the transverse direction (X) of the housing (3) relative to the bolt (40); and
wherein the second connection hole (201) is oblong and extends in the longitudinal direction (Y) of the housing (3) to enable the end of the second electrical transmission member (2) to move in the longitudinal direction (Y) of the housing (3) relative to the bolt (40).

2. The electrical connection device according to claim 1, wherein
a predetermined gap exists between the end of the first electrical transmission member (1) and side walls (30) of the housing (3) to allow the end of the first electrical transmission member (1) to rotate about the bolt (40) within a predetermined angular range.

3. The electrical connection device according to claim 1, wherein
a predetermined gap exists between the end of the second electrical transmission member (2) and side walls (30) of the housing (3) to allow the end of the second electrical transmission member (2) to rotate about the bolt (40) within a predetermined angular range.

4. The electrical connection device according to any one of claims 1-3, further comprising:
an elastic conductive member (100) compressed in an axial direction of the bolt (40) between the end of the first electrical transmission member (1) and the end of the second electrical transmission member (2) to enable one of the end of the first electrical transmission member (1) and the end of the second electrical transmission member (2) to float in the axial direction of the bolt (40) relative to the other.

5. The electrical connection device according to claim 4, wherein
the elastic conductive member (100) is a helical spring coiled into a ring shape or an annular wave spring.

6. The electrical connection device according to claim 1, wherein
the first electrical transmission member (1) comprises:
a first conductor (10) having an end that is flat; and
a first insulating layer (11), the first conductor (10) being wrapped in the first insulating layer (11);
wherein the end of the first conductor (10) is exposed from the first insulating layer (11), and the first connection hole (101) is formed in the end of the first conductor (10).

7. The electrical connection device according to claim 6, wherein
the second electrical transmission member (2) comprises:
a second conductor (20) having an end that is flat; and
a second insulating layer (21), the second conductor (20) being wrapped in the second insulating layer (21);
wherein the end of the second conductor (20) is exposed from the second insulating layer (21), and the second connection hole (201) is formed in the end of the second conductor (20).

8. The electrical connection device according to claim 7, wherein
the first conductor (10) and the second conductor (20) are aluminum busbars or aluminum alloy busbars; and
the electrical connection device further comprises:
a first copper terminal (12) fixed to the end of the first conductor (10) and formed with an oblong first through hole (102) corresponding to the first connection hole (101); and
a second copper terminal (22) fixed to the end of the second conductor (20) and formed with an oblong second through hole (202) corresponding to the second connection hole (201);
wherein after the bolt (40) is tightened, the first copper terminal (12) and the second copper terminal (22) are in direct electrical contact to electrically connect the first electrical transmission member (1) and the second electrical transmission member (2).

9. The electrical connection device according to claim 7, wherein
the first conductor (10) and the second conductor (20) are aluminum busbars or aluminum alloy busbars; and
the electrical connection device further comprises:
a first copper terminal (12) fixed to the end of the first conductor (10) and formed with an oblong first through hole (102) corresponding to the first connection hole (101); and
a second copper terminal (22) fixed to the end of the second conductor (20) and formed with an oblong second through hole (202) corresponding to the second connection hole (201); and
an elastic conductive member (100) compressed in an axial direction of the bolt (40) between the first copper terminal (12) and the second copper terminal (22);
wherein after the bolt (40) is tightened, the first copper terminal (12) and the second copper terminal (22) are floatingly electrically connected together via the elastic conductive member (100).

10. The electrical connection device according to claim 1, further comprising:
a front seal (6) sleeved on the first electrical transmission member (1);
wherein the front seal (6) is inserted into the front port (31) of the housing (3) and is compressed radially between an outer peripheral surface of the first electrical transmission member (1) and an inner peripheral surface of the front port (31) to seal the front port (31) of the housing (3).

11. The electrical connection device according to claim 10, wherein
the end of the first electrical transmission member (1) is located above the end of the second electrical transmission member (2), the housing (3) further has a first support rib (3a) connected to the bottom wall thereof, the first electrical transmission member (1) passes through a gap between a top surface of the first support rib (3a) and the top wall of the housing (3), and the first support rib (3a) abuts against a bottom side of the first electrical transmission member (1).

12. The electrical connection device according to claim 11, further comprising:
a front end cover (7) sleeved on the first electrical transmission member (1) and locked onto a front end of the housing (3);
wherein a first positioning rib (7a) is formed on an inner side of the front end cover (7), and the front seal (6) is compressed axially between the first positioning rib (7a) and the first support rib (3a) to axially position the front seal (6).

13. The electrical connection device according to claim 1, further comprising:
a rear seal (8) sleeved on the second electrical transmission member (2);
wherein the rear seal (8) is inserted into the rear port (32) of the housing (3) and is compressed radially between an outer peripheral surface of the second electrical transmission member (2) and an inner peripheral surface of the rear port (32) to seal the rear port (32) of the housing (3).

14. The electrical connection device according to claim 13, wherein
the end of the first electrical transmission member (1) is located above the end of the second electrical transmission member (2), the housing (3) further has a second support rib (3b) connected to the top wall thereof, the second electrical transmission member (2) passes through a gap between a bottom surface of the second support rib (3b) and the bottom wall of the housing (3), and the second support rib (3b) abuts against a top side of the second electrical transmission member (2).

15. The electrical connection device according to claim 14, further comprising:
a rear end cover (9) sleeved on the second electrical transmission member (2) and locked onto a rear end of the housing (3);
wherein a second positioning rib (9a) is formed on an inner side of the rear end cover (9), and the rear seal (8) is compressed axially between the second positioning rib (9a) and the second support rib (3b) to axially position the rear seal (8).
